# EUROPEAN PATENT APPLICATION

(11) **EP 3 748 059 A1**
(43) Date of publication of application: **09.12.2020**
(21) Application number: 19747284.8
(22) Date of filing: 29.01.2019
(51) Int. Cl.: D06C 11/00

(54) **METHOD FOR MANUFACTURING RAISED SHEET, AND CLEANING SHEET**

(30) Priority: 30.01.2018 US 201862623739 P
(71) Applicant: Yamada, Kikuo, Shinagawa-ku Tokyo 141-0022 (JP)
(72) Inventor: Yamada, Kikuo, Shinagawa-ku Tokyo 141-0022 (JP)
(74) Representative: Ishiguro, Masaoki
(86) International application number: PCT/JP2019/002964
(87) International publication number: WO 2019/151247

(57) **Abstract**

Provided is a method for efficiently obtaining a raised sheet as a sheet for cleaning that has raised cleaning portions and effectively collects dust.

A method for manufacturing a raised sheet includes: a step of stacking a base material sheet and fiber aggregate; a step of applying a load to fibers of the fiber aggregate under an unheated state; a joining step of forming joining portions by partially joining the fiber aggregate and the base material sheet; a cutting step of forming a fiber bundle joined to the base material sheet in the joining portions by cutting the fiber aggregate at portions where the fiber aggregate and the base material sheet are not joined; and a step of raising fibers by injecting fluid to the fiber bundle.

## Description

### TECHNICAL FIELD

The present invention relates to a method for manufacturing a raised sheet used as a cleaning sheet and a cleaning sheet having raised cleaning portions.

### BACKGROUND ART

Sheets for cleaning to wipe off dust such as dirt and mote adhering to floors and walls have been widely used. Each of such sheets for cleaning includes cleaning portions which are constituted of a multitude of fibers on a base material sheet formed of nonwoven fabric, and when the cleaning portions are brought in contact with a floor or a wall to wipe off the dust, the dust is caught between fibers of the cleaning portions. In recent years, there are various types of sheets for cleaning, and for example, there are a sheet that is formed by joining bundles of fibers on one surface of a base material sheet and is used by being wrapped around a base attached to a head of a broomstick and a sheet that is formed by stacking a plurality of base material sheets having fiber bundles joined thereto and thereby forming a bag-like body having an opening to which a broomstick is to be inserted and is used with a broomstick inserted into the opening.

Each of the sheets for cleaning is manufactured by sequentially drawing out a lengthy body to be a base material sheet, disposing, on this drawn-out lengthy body, fiber bundles formed by bundling a multitude of fibers, joining the lengthy body and the fiber bundles at predetermined intervals by heat-sealing, and cutting the fiber bundles and the lengthy body between the heat-sealed joining portions by a cutter. Here, the fiber bundles joined onto the base material sheet serve as a cleaning portion that collects dust.

However, fibers of the cleaning portion of the cleaning tool manufactured as described above have lain down in a certain direction, thereby leading to a problem in that it is difficult to efficiently collect dust.

Therefore, in recent years, a capability of collecting dust is enhanced by raising the fibers of the cleaning portion of the sheet for cleaning. As a method for manufacturing the sheet for cleaning having the above-mentioned raised cleaning portion, there has been known a method including: forming continuous long fiber bundles by joining continuous long fibers by a plurality of joining portions; obtaining fiber bundles by cutting these continuous long fiber bundles between the joining portions; thereafter, blowing fluid to these unopened fiber bundles to open them, thereby obtaining a plurality of clumpy fiber bundles; and joining the plurality of clumpy fiber bundles to a base material sheet, thereby obtaining a cleaning sheet having raised portions (Patent Document 1). In addition, there has been known a method including: stacking and joining a base material sheet and continuous fiber bundles to form a layered body; obtaining fiber layers of a sheet for cleaning by cutting the layered body between joining portions; and opening the fiber layers by blowing air to the fiber layers, thereby obtaining a sheet for cleaning having raised cleaning portions (Patent Document 2) .

### PRIOR ART DOCUMENT

### PATENT DOCUMENT

Patent Document 1: Japanese Patent No. 5007218
Patent Document 2: Japanese Laid-Open Patent Publication No. 2008-6260

### SUMMARY OF THE INVENTION

### PROBLEMS TO BE SOLVED BY THE INVENTION

However, when the fiber bundles are cut, the cut surface of fibers becomes in a state where fibers are closely spaced and fixed to one another. In addition, when the sheet for cleaning is manufactured, fibers are pressed many times by a feed roll and a tension force is applied to the fibers. Thus, the fibers become closely spaced and are hardly opened and raised, thereby making it difficult to form raised cleaning portions that are able to efficiently collect dust. In order to raise such fibers, it is required to blow compressed air to the fibers for a long period of time or to use high-class fibers that are easily opened and raised. In addition, the manufacturing of the sheet for cleaning described in Patent Document 1 is complicating because it is necessary to further join the plurality of opened clumpy fiber bundles to the base material sheet. Furthermore, since the opened clumpy fiber bundles are heated and pressurized by an emboss roll to be joined to the base material sheet, bulkiness of the opened clumpy fiber bundles is reduced by heating and pressurization upon joining. In order to recover this, after the clumpy fiber bundles are joined to the base material sheet, fluid is blown to the clumpy fiber bundles to open them again. However, the fibers of the clumpy fiber bundles are partially fused together by the heating and the pressurization by the emboss roll upon joining, thereby making it difficult to obtain a sheet for cleaning whose fibers are sufficiently raised.

The present invention has been made in view of above respects, and has an objective to provide a method for efficiently and easily obtaining a raised sheet and a sheet for cleaning having raised cleaning portions that are excellent in dust collection efficiency.

### MEANS FOR SOLVING THE PROBLEMS

A method for manufacturing a raised sheet according to claim 1 includes:
a step of stacking a base material sheet and fiber aggregate;
a step of applying a load to fibers of the fiber aggregate stacked on the base material sheet under an unheated state;
a joining step of forming joining portions by partially joining the fiber aggregate and the base material sheet;
a cutting step of forming a fiber bundle joined to the base material sheet in the joining portions by cutting the fiber aggregate at portions where the fiber aggregate and the base material sheet are not joined; and
a step of raising fibers by injecting fluid to the fiber bundle.

In addition, a method for manufacturing a raised sheet according to claim 10 includes:
a joining step of forming joining portions by stacking a base material sheet and fiber aggregate and partially joining the fiber aggregate and the base material sheet;
a cutting step of forming a fiber bundle joined to the base material sheet in the joining portions by cutting the fiber aggregate at portions where the fiber aggregate and the base material sheet are not joined;
a step of applying a load to the fibers under an unheated state by pressing fibers of the fiber bundle; and
a step of raising the fibers of the fiber bundle by injecting fluid to the fiber bundle joined to the base material sheet in the joining portions.

A sheet for cleaning according to claim 16 is constituted of a raised sheet manufactured by the method according to claims 1 to 15.

### EFFECTS OF THE INVENTION

The method for manufacturing a raised sheet according to each of claim 1 and claim 10 allows the raised sheet, whose fibers of the fiber bundle are efficiently and surely raised, to be manufactured, by including, in a method including: stacking a base material sheet and fiber aggregate; partially joining the fiber aggregate to the base material sheet; cutting the fiber aggregate at non-joining portions with the base material sheet to obtain a fiber bundle joined to the base material sheet in the joining portions; and raising fibers of the fiber bundle, a step of applying a load to the fibers under an unheated state by pressing fibers of the fiber bundle and a step of injecting fluid to the fiber bundle A sheet for cleaning according to claim 16 has a plurality of raised cleaning portions and is suitable as a sheet for cleaning, which can effectively collect dust in the raised cleaning portions.

### BRIEF DESCRIPTION OF THE DRAWINGS

Fig. 1 is a schematic view illustrating an apparatus for manufacturing a raised sheet;
Fig. 2 is an enlarged view illustrating a fusion roll in the apparatus illustrated in Fig. 1;
Fig. 3 is a schematic plan view illustrating a multilayer sheet in which seal portions are formed by partially fusing a base material sheet and tow fibers by the fusion roll;
Fig. 4 is an enlarged view illustrating a cutting roll in the apparatus illustrated in Fig. 1;
Fig. 5 is a schematic plan view illustrating a multilayer sheet obtained by cutting portions between the seal portions of the multilayer sheet illustrated in Fig. 3;
Fig. 6 is an enlarged view illustrating a first pressure roll illustrated in Fig. 1; and

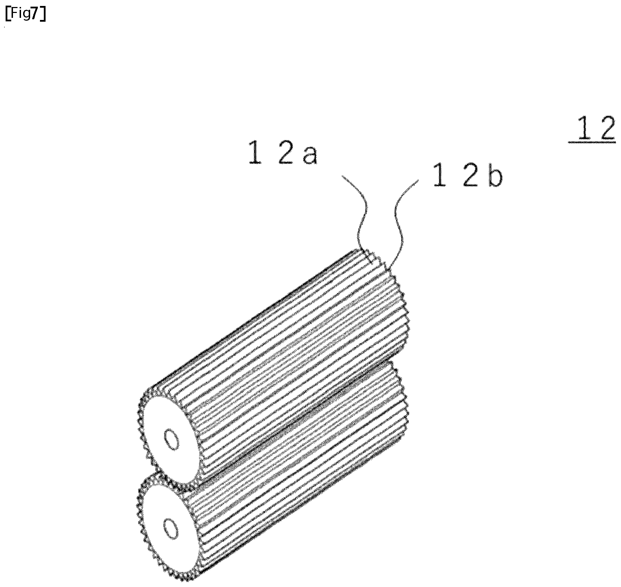

Fig. 7 is an enlarged view illustrating a second pressure roll illustrated in Fig. 1.

### MODES FOR CARRYING OUT THE INVENTION

Hereinafter, embodiments of the present invention will be described with reference to the accompanying drawings. It is to be noted that in the embodiments, components having the same functions are denoted by the same letters or numerals and overlapping description is omitted or simplified.

### (First Embodiment)

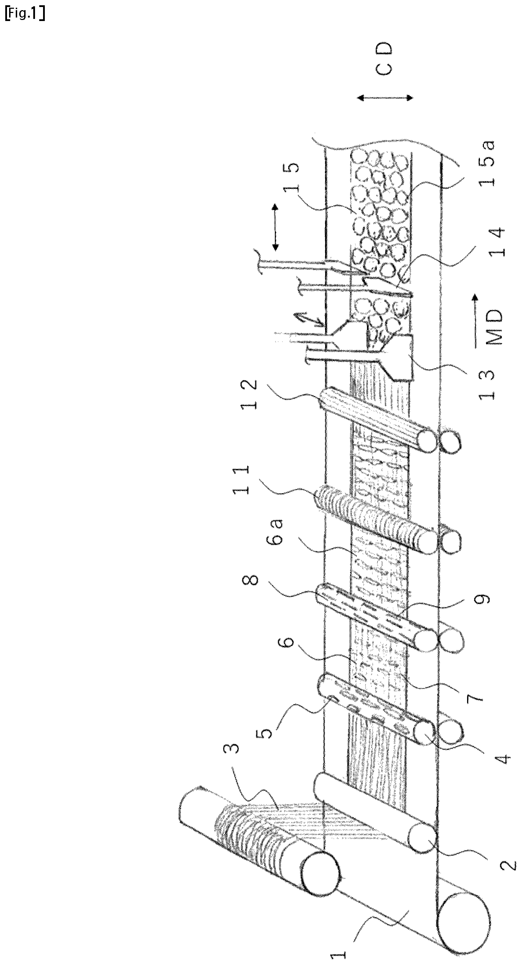

Fig. 1 is a schematic view illustrating an apparatus for manufacturing a raised sheet, in accordance with an embodiment of the present invention. In Fig. 1, a base material sheet 1 rolled up in a roll shape is rolled out by a feed roll 2 in a machine direction (MD) direction. The base material sheet 1 is formed of paper, synthetic resin, or nonwoven fabric, and the nonwoven fabric is preferable. As the nonwoven fabric, spunlace nonwoven fabric, spunbond nonwoven fabric, thermally bonded nonwoven fabric, air-through nonwoven fabric, or point-bonded nonwoven fabric can be used.

On the other hand, fiber aggregate 3 is rolled out in the MD direction by the feed roll 2 and is stacked on the base material sheet 1 in a region that has a predetermined width and includes at least a central portion in a cross direction (CD) direction of the base material sheet 1. Used as the fiber aggregate 3 is a bundle of fibers formed by collecting a large number of spun yarns composed of synthetic fibers and winding them into a ropelike shape (hereinafter, the fiber aggregate may be referred to as tow fibers).

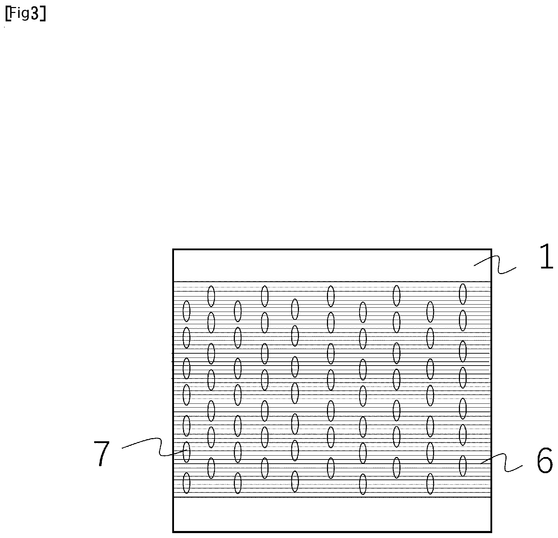

The base material sheet 1 and the tow fibers 3 that are stacked are pressed by a fusion roll 4. A plurality of projection portions 5 is arranged on a roll surface of the fusion roll 4, and the fusion roll 4 is heated at a temperature enough to fuse the tow fibers 3 with the base material sheet 1 by the projection portions 5. Therefore, the tow fibers 3 passing through the fusion roll 4 are heated and pressed by the plurality of projection portions 5 of the fusion roll 4, and the heated portions of the tow fibers 3 are fused with the base material sheet 1, thereby forming a multilayer sheet 6 having a plurality of seal portions 7 (Fig. 3).

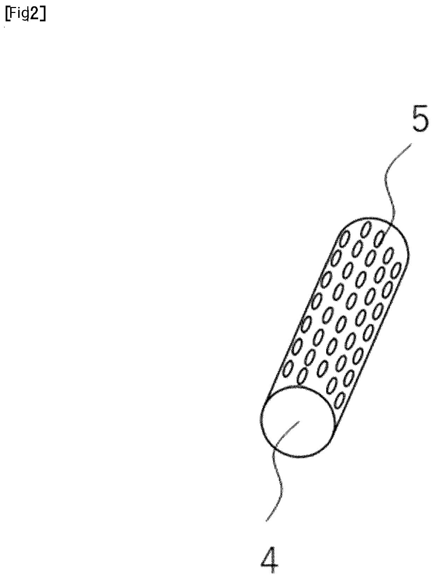

As illustrated in Fig. 2, the plurality of projection portions 5 each having an elliptic cylindrical shape are provided partially on the fusion roll 4 in a rotational axis direction of the fusion roll 4 to form a first projection portion line, and a plurality of the projection portion lines is formed on the peripheral surface of the fusion roll 4 in a rotational direction. The projection portions 5 of the projection portion lines adjacent to one another are arranged so as to be in positions shifted from one another. As illustrated in Fig. 3, the portions of the tow fibers 3, which are heated and pressed by the projection portions 5 of the fusion roll 4, are partially fused with the base material sheet 1 to be the multilayer sheet 6 having the plurality of seal portions 7 provided partially. The seal portions 7 of the multilayer sheet 6 are formed to be alternately located in the MD direction.

Although the present embodiment describes a case in which each of the projection portions 5 of the fusion roll 4 has an elliptic cylindrical shape, each of the projection portions 5 may have a circular cylindrical shape or a polygonal shape such as a triangular prism shape or a quadrangular prism shape or may have other shapes. In addition, although a case in which the projection portions 5 are arranged evenly on the surface of the fusion roll 4 is described, it is not necessarily required for the projection portions 5 to be evenly arranged.

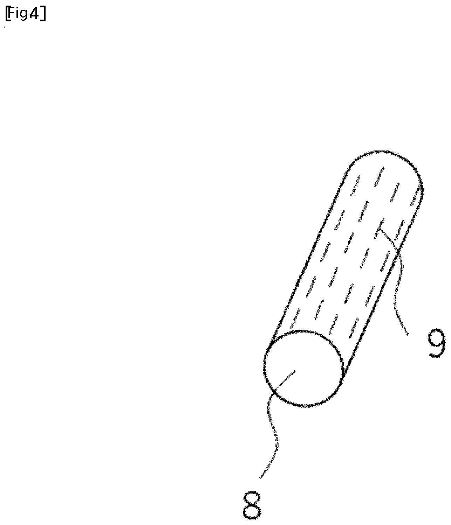

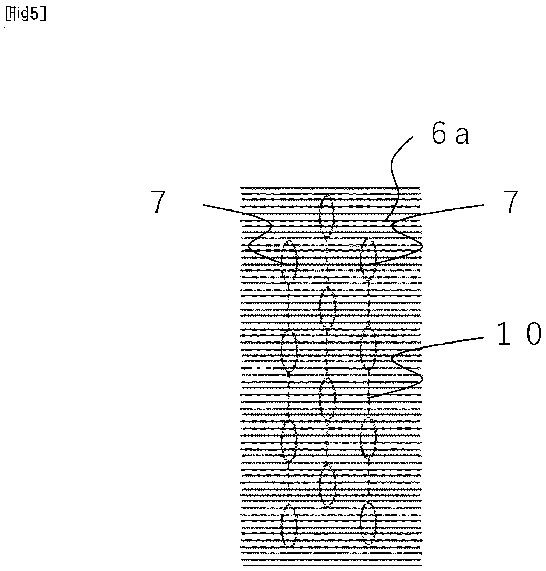

Subsequently, the tow fibers 3 of the multilayer sheet 6 are cut between the seal portion 7 and the seal portion 7 that are provided partially in the CD direction by a cutting roll 8. As illustrated in Fig. 4, a plurality of cutting blades 9 are provided on a roll surface of the cutting roll 8, and the portions between the seal portions 7 of the tow fibers 3 in the MD direction are cut by the cutting blades 9, thereby forming a multilayer sheet 6a in which portions between the seal portions 7 of the tow fibers 3 are cut. It is to be noted that by adjusting a height of a blade of each of the cutting blades 9 or a pressing force of the cutting roll, only the tow fibers 3 may be cut by the cutting roll 8 or the base material sheet 1 may also be cut by the cutting roll 8 concurrently together with the tow fibers 3. Fig. 5 illustrates the multilayer sheet 6a in which cut portions 10 (indicated by dotted lines) between the seal portions 7, which are partially provided in the CD direction, are formed. In this multilayer sheet 6a, the cut portions 10 are formed so as to sandwich each of the seal portions 7 located adjacent to each other in the MD direction (these seal portions 7 are partially provided in the CD direction such that positions of the adjacent seal portions 7 are shifted from one another) between the cut portions 10. Although the present embodiment describes the case in which the tow fibers 3 are partially fused with the base material sheet 1 by the fusion roll 4 to form the seal portions 7, and thereafter, the portions between the seal portions 7 are cut by the cutting roll 8, the tow fibers 3 may be partially cut by the cutting roll 8 and thereafter, portions between the cut portions of the tow fibers 3 may be fused with the base material sheet 1 by the fusion roll 4. In addition, the present invention is not limited to the case in which fusion and cutting of the tow fibers 3 are conducted by the fusion roll 4 and cutting roll 8 that are separate, and the fusion and the cutting of the tow fibers 3 may be concurrently conducted by using a fusion and cutting roll that includes projection portions for fusing the tow fibers 3 and cutting blades for cutting the tow fibers 3 on a surface thereof.

The multilayer sheet 6a having the cut portions 10 formed therein is in a state in which fibers sandwiching the seal portions 7 can be raised. However, in the vicinity of end surfaces of fibers of the cut portions 10 of the tow fibers 3, due to shearing stress exerted when the fibers are cut by the cutting blades 9, the fibers are fixed to one another and are closely spaced.

The multilayer sheet 6a in which the cut portions 10 are formed between the seal portions 7 is then pressed by a first pressure roll 11 and a second pressure roll 12, and thereby, a load is applied to the fibers under an unheated state. In the present embodiment, the first pressure roll 11 is constituted of a pair of emboss rolls having a plurality of protrusions 11a and a plurality of recesses 11b that extend in a rotational direction of the roll and are repeatedly arranged in an axial direction. In addition, the second pressure roll 12 is constituted of a pair of emboss rolls having a plurality of protrusions 12a and a plurality of recesses 12b that extend in an axial direction of the roll and are repeatedly arranged in the rotational direction of the roll. The multilayer sheet 6a is pressed by passing through the first pressure roll 11 and the second pressure roll 12, and a load is thereby applied to the fibers. This causes the fibers, which are fixed to one another and are closely spaced due to the shearing stress exerted when the fibers are cut by the cutting blades 9 of the cutting roll 8, to be disentangled.

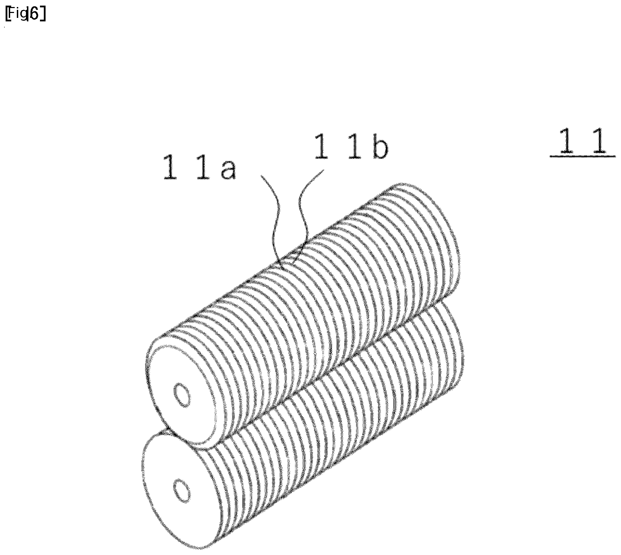

In the present embodiment, loads in the different directions are applied to the fibers by the first pressure roll 11 constituted of the emboss rolls having the protrusions and recesses that extend in the MD direction and the second pressure roll 12 constituted of the emboss rolls having the protrusions and recesses that extend in the CD direction, thereby allowing the fibers in the fixed and dense state to be effectively disentangled. It is to be noted that the present invention is not limited to the case in which the first pressure roll 11 and the second pressure roll 12 are disposed in the order as illustrated, and the first pressure roll 11 and the second pressure roll 12 may be disposed in reverse order. In addition, the present invention is not limited to the case in which each of the first pressure roll 11 and the second pressure roll 12 is constituted of the pair of upper and lower emboss rolls, and only one of the upper and lower rolls may have an emboss pattern and the other thereof may be a flat roll. However, it is preferable that the roll that comes in contact with the fibers has an emboss pattern. In addition, the present invention is not limited to the case in which the two pressure rolls, which are the first pressure roll 11 and the second pressure roll 12, are provided as illustrated, and only one pressure roll may be provided, and in such a case, it is preferable that the pressure roll has an emboss pattern in which protrusions and recesses are repeated in a direction orthogonal to a flow direction of the tow fibers as with the first pressure roll 11. Furthermore, three or more pressure rolls may be provided to apply loads to the fibers. In addition, the present invention is not limited to the case in which each of the pressure rolls has an emboss pattern, and as long as each of the pressure rolls can apply a load to the fibers, each of the pressure rolls may be a flat pressure roll having no emboss pattern. However, it is preferable that each of the pressure rolls is an emboss roll capable of applying a sufficient load to the fibers. It is preferable that the emboss rolls are emboss rolls capable of applying loads to the fibers from different directions such as emboss rolls having different emboss patterns or emboss rolls having random emboss patterns. It is preferable to use an emboss pattern capable of easily applying a load in a direction that disentangles the fibers in the fixed and dense state, such as the emboss pattern in which the protrusions and recesses are repeated in the direction orthogonal to the flow direction of the tow fibers as illustrated in Fig. 6.

It is to be noted that although it is only required for a temperature in the unheated state to be a temperature within a range in which no fusion is caused on the fibers, in particular, it is preferable that the temperature in the unheated state is equal to or less than a softening temperature of the fibers. Although each of the first pressure roll 11 and the second pressure roll 12 may be warmed at a temperature at which no fusion is caused on the fibers, heat may be generated when pressing is repeated by each of the pressure rolls, and the fibers are likely to be heated by the generated heat to the softening temperature or greater and thereby partially adhere to one another. Thus, a step of applying a load to the fibers by each of the pressure rolls 11 and 12 may be conducted while cooling is conducted. Examples of a method of conducting the step of applying a load to the fibers while conducting cooling include a method in which pressing is conduced while each of the pressure rolls 11 and 12 is cooled by water cooling or a method in which cold air is blown during the step of pressing by the pressure rolls and/or before and after the step of pressing by the pressure rolls. When the pressure rolls are cooled, both of the pair of the upper and lower pressure rolls or either one of the pair thereof may be cooled. However, when only one of the pair the rolls is cooled, it is preferable to cool the roll that comes in contact with the fibers. In addition, when cooling is conducted by blowing cold air, the cold air can be blown to both or one of the fibers and the base material sheet. However, it is preferable that the cold air is blown to at least the fibers. Moreover, when the two pressure rolls, which are the first pressure roll 11 and the second pressure roll 12, are used as described in the present embodiment, both of the pressure rolls may be cooled or either one of the pressure rolls may be cooled.

The multilayer sheet 6a of which the fibers between the seal portions 7 adjacent to one another in the CD direction are cut by the cutting roll 8 and that is pressed by the first pressure roll 11 and the second pressure roll 12 is subjected to the injection of fluid from a first fluid injection nozzle (hereinafter, referred to as a first nozzle) 13 and a second fluid injection nozzle (hereinafter, referred to as a second nozzle) 14. As a result, a raised sheet 15 having raised portions 15a where fibers sandwiching the seal portions 7 are raised is formed. Compressed air is typically used as the fluid injected from the first nozzle 13 and the second nozzle 14, and hereinafter, a case in which the compressed air is injected will be described.

The first nozzle 13 reciprocates in the CD direction while injecting compressed air to the multilayer sheet, and the second nozzle 14 reciprocates in the MD direction while injecting compressed air to the multilayer sheet. Since the cut surfaces of the fibers sandwiching the seal portions 7 of the multilayer sheet 6a are disentangled by the first pressure roll and the second pressure roll and in a state that allows the fibers to be easily raised. Additionally, since the multilayer sheet 6a receives compressed air injected from different directions, the fibers can be raised finely, easily (in a short period of time) and at low costs.

Pressures of the compressed air injected from the first nozzle 13 and the second nozzle 14 may be the same or may be different from each other. In addition, as long as the directions in which the first nozzle 13 and the second nozzle 14 are moved are different from each other, the directions are not necessarily required to be the CD direction and the MD direction. In addition, the first nozzle 13 may be configured to be moved in the MD direction and the second nozzle 14 may be configured to be moved in the CD direction.

Although the present embodiment describes a case in which one nozzle moved in the CD direction and one nozzle moved in the MD direction are provided, two or more nozzles moved in the CD direction and two or more nozzles moved in the MD direction may be provided, and a nozzle moved in a direction different from the CD direction and the MD direction may be provided and compressed air may be injected to the fibers from three or more different directions. In addition, the present invention is not limited to the case in which two or more nozzles injecting compressed air to the fibers as with the first nozzle 13 and the second nozzle 14 are provided as described in the present embodiment, and only one nozzle injecting compressed air may be provided. However, it is preferable to inject compressed air to the fibers from different directions. For example, it is preferable to inject compressed air to the fibers from different directions to raise the fibers by moving a nozzle in the CD direction or the MD direction while rotating the nozzle, or injecting compressed air from a plurality of nozzles that inject compressed air in different directions.

The raised sheet obtained as described above is cut in an appropriate length and can be used as a sheet for cleaning.

### (Other Embodiments)

The above-described first embodiment describes a case in which the portions between the seal portions 7, which are partially arranged in the CD direction, are cut by the cutting roll 8, and thereafter, the step of applying a load to the fibers by using the first pressure roll 11 and the second pressure roll 12 is conducted. However, the step of applying a load to the fibers may be conducted before the step of partially joining the base material sheet 1 and the tow fibers 3 by using the fusion roll 4 or may be conducted after partially fusing the base material sheet 1 and the tow fibers 3. It is preferable that the step of applying a load to the fibers is conducted after the step of partially fusing the base material sheet 1 and the tow fibers 3, and it is particularly preferable that the step of applying a load to the fibers is conducted after the step of cutting by the cutting roll 8. In addition, the step of applying a load to the fibers may be conducted in a plurality of times in manufacturing steps. In addition, the present invention is not limited to the case in which the seal portions 7 are partially provided in the CD direction, and fiber bundles may be joined to the base material sheet by seal portions continuous in the CD direction and the portions between the seal portions may be cut at predetermined intervals in the MD direction. In this case, by concurrently cutting the fiber bundles and the base material sheet with the seal portion located in the middle, a sheet for cleaning in which fibers are disposed on both sides of each of the seal portions can be obtained.

The embodiments described hereinbefore are examples of preferred embodiments of the present invention. However, the present invention is not limited to these, and a variety of modifications can be implemented without departing from the scope of the present invention.

### DESCRIPTION OF LETTERS OR NUMERALS

- 1: Base Material Sheet
- 3: Tow Fibers
- 4: Fusion Roll
- 6, 6a: Multilayer Sheet
- 8: Cutting Roll
- 11, 12: Pressure Roll
- 13, 14: Fluid Injection Nozzle
- 15: Raised Sheet

## Claims

1. A method for manufacturing a raised sheet, the method comprising:
a step of stacking a base material sheet and fiber aggregate;
a step of applying a load to fibers of the fiber aggregate stacked on the base material sheet under an unheated state;
a joining step of forming joining portions by partially joining the fiber aggregate and the base material sheet;
a cutting step of forming a fiber bundle joined to the base material sheet in the joining portions by cutting the fiber aggregate at portions where the fiber aggregate and the base material sheet are not joined; and
a step of raising fibers by injecting fluid to the fiber bundle.

2. The method for manufacturing a raised sheet according to claim 1, wherein the load is applied to the fibers under the unheated state at a temperature equal to or less than a softening temperature of the fibers of the fiber aggregate.

3. The method for manufacturing a raised sheet according to claim 1, wherein the step of applying the load to the fibers of the fiber aggregate is conducted before the joining step of forming the joining portions by partially joining the fiber aggregate and the base material sheet.

4. The method for manufacturing a raised sheet according to claim 1, wherein the step of applying the load to the fibers of the fiber aggregate is conducted after the joining step of forming the joining portions by partially joining the fiber aggregate and the base material sheet.

5. The method for manufacturing a raised sheet according to claim 1, wherein the step of applying the load to the fibers of the fiber aggregate is conducted after the cutting step of forming the fiber bundle by cutting the fiber aggregate at the portions where the fiber aggregate and the base material sheet are not joined.

6. The method for manufacturing a raised sheet according to claim 1, wherein the load is applied to the fibers of the fiber aggregate by pressing the fiber aggregate stacked on the base material sheet.

7. The method for manufacturing a raised sheet according to claim 6, wherein the load is applied to the fibers of the fiber aggregate by pressing the fibers of the fiber aggregate by a pressure roll having an emboss pattern.

8. The method for manufacturing a raised sheet according to claim 7, wherein loads are applied to the fibers of the fiber aggregate by pressing the fibers of the fiber aggregate by two or more pressure rolls having emboss patterns different from each other.

9. The method for manufacturing a raised sheet according to claim 1, wherein the load is applied to the fibers of the fiber aggregate while cooling is conducted.

10. A method for manufacturing a raised sheet, the method comprising:
a joining step of forming joining portions by stacking a base material sheet and fiber aggregate and partially joining the fiber aggregate and the base material sheet;
a cutting step of forming a fiber bundle joined to the base material sheet in the joining portions by cutting the fiber aggregate at portions where the fiber aggregate and the base material sheet are not joined;
a step of applying a load to the fibers under an unheated state by pressing fibers of the fiber bundle; and
a step of raising the fibers of the fiber bundle by injecting fluid to the fiber bundle joined to the base material sheet in the joining portions.

11. The method for manufacturing a raised sheet according to claim 10, wherein the load is applied to the fibers under the unheated state at a temperature equal to or less than a softening temperature of the fibers of the fiber aggregate.

12. The method for manufacturing a raised sheet according to claim 10, wherein the load is applied to the fibers by pressing the fiber bundle by a pressure roll having an emboss pattern.

13. The method for manufacturing a raised sheet according to claim 10, wherein loads are applied to the fibers by pressing the fibers by a first pressure roll having an emboss pattern and pressing the fibers by a second pressure roll having an emboss pattern different from the emboss pattern of the first pressure roll.

14. The method for manufacturing a raised sheet according to claim 13, wherein one of the emboss pattern of the first pressure roll and the emboss pattern of the second pressure roll is an emboss pattern having protrusions and recesses that extend in a rotational axis direction of a roll and are repeatedly arranged and another of the emboss pattern of the first pressure roll and the emboss pattern of the second pressure roll is an emboss pattern having protrusions and recesses that extend in a rotational direction of a roll and are repeatedly arranged.

15. The method for manufacturing a raised sheet according to claim 10, wherein the load is applied to the fibers of the fiber aggregate while cooling is conducted.

16. A sheet for cleaning having a plurality of raised cleaning portions of which fibers are raised by the method according to any of claims 1 to 15.
